# EUROPEAN PATENT APPLICATION

(11) **EP 3 010 209 A1**
(43) Date of publication of application: **20.04.2016**
(21) Application number: 15190431.5
(22) Date of filing: 19.10.2015
(51) Int. Cl.: H04L 29/12

(54) **DOCSIS PROVISIONING OF POINT-TO-POINT ETHERNET**

(30) Priority: 19.10.2014 US 201462065683 P; 11.11.2014 US 201462077990 P
(71) Applicant: Oliver Solutions Ltd., 4672211 Herzliya (IL)
(72) Inventor: CHANUKAEV, Mark, 3708423 Pardes Hana (IL); ARAV, Roy, 6492016 Tel Aviv (IL); GANOR, David, 1790600 Shimshit (IL); GREENBERG, Daniel, 7569821 Rishon-Lezion (IL)
(74) Representative: Tischner, Oliver

(57) **Abstract**

A system for provisioning of point-to-point Ethernet data services via a cable provisioning infrastructure, including CPEs, and floor switches that include customer-facing ports, each CPE being connected to a customer-facing port, and a cable operator distribution hub, including aggregation switches, each floor switch being connected to one aggregation switch, a gateway server, and an operations support system server provisioning cable data services to the subscribers, including a host configuration server dynamically allocating network addresses to the CPEs, wherein the aggregation switches and the gateway server are configured to intermediate as a double-relay for initial network address request messages between the CPEs and the host configuration server, whereby the aggregation switches relay the messages to the gateway server, and the gateway server relays the messages to the host configuration server, and wherein the gateway server is operable to add host configuration server options to messages that it relays.

## Description

### CROSS REFERENCE TO RELATED APPLICATIONS

This application claims priority benefit of U.S. Provisional Application No. 62/065,683, filed on October 19, 2014 by inventors Mark Chanukaev and Roy Arav, the contents of which are hereby incorporated by reference. This application also claims priority benefit of U.S. Provisional Application No. 62/077,990, filed on November 11, 2014 by inventor Mark Chanukaev, the contents of which are hereby incorporated by reference.

### FIELD OF THE INVENTION

The present invention relates to provisioning of point-to-point Ethernet services using the Data over Cable Service Interface Specification (DOCSIS), and to software defined networking (SDN).

### BACKGROUND OF THE INVENTION

Data over Cable Service Interface Specification (DOCSIS) is a telecommunication standard that enables high-bandwidth data transfer over an existing Cable TV system. DOCSIS is used by cable television operators to provide their subscribers with cable Internet data services over existing all-coax or hybrid fiber-coax (HFC) infrastructures. DOCSIS includes an extensive Operations Support System (OSS) for network provisioning.

In some locations, cable operators have access to point-to-point Ethernet cables, instead of HFC cables. However, it would be very costly and time-consuming to develop a new network provisioning system for point-to-point Ethernet. It would thus be of great advantage to be able to re-use existing DOCSIS provisioning systems for point-to-point Ethernet.

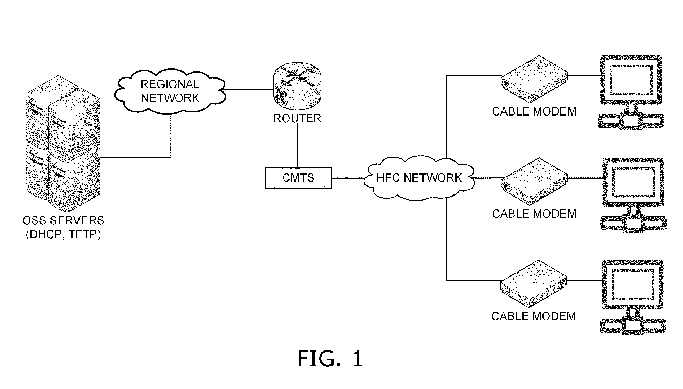

Reference is made to **FIG. 1**, which is a simplified block diagram of a conventional cable system. **FIG. 1** shows components including a plurality of cable modems, an OSS including a Dynamic Host Configuration Protocol (DHCP) server and a Trivial File Transfer Protocol (TFTP) server, a cable modem termination system (CMTS), a router, a regional network and an HFC network.

### SUMMARY OF THE DESCRIPTION

Embodiments of the present invention provide systems and methods for re-using existing DOCSIS OSS provisioning systems, for provisioning of point-to-point Ethernet data services, thereby obviating the need for cable operators to develop a new network provisioning system for use with point-to-point Ethernet cables.

Embodiments of the present invention enable the same management and provisioning capabilities of conventional coax deployments to point-to-point Ethernet deployments, with seamless connectivity to the DOCSIS OSS. In order to enable such capabilities, embodiments of the present invention provide (i) Dynamic Host Configuration Protocol (DHCP) capability via DOCSIS OSS, (ii) translation of DOCSIS configuration files to switch configurations, and (iii) scalable Simple Network Management Protocol (SNMP) capability.

There is thus provided in accordance with an embodiment of the present invention a system for provisioning of point-to-point Ethernet data services via a cable provisioning infrastructure, including a multiple dwelling unit for a plurality of cable operator subscribers, including a plurality of subscriber customer premises equipment (CPEs), each CPE having a unique identifier, and one or more floor switches, each floor switch including one or more customer-facing ports, wherein each CPE is connected to one of the customer-facing ports, and each customer-facing port of each floor switch stores the unique identifiers of the CPEs connected to that floor switch, in an identifier database, and a cable operator distribution hub, including one or more aggregation switches, wherein each floor switch is connected to one aggregation switch, a gateway server, connected to the distribution hub, and an operations support system server, connected to the gateway server, operable to provision cable data services to the subscribers, including a dynamic host configuration server operative to dynamically allocate network addresses to the CPEs, wherein the aggregation switches and the gateway server are configured to intermediate as a double-relay for initial network address request messages between the CPEs and the dynamic host configuration server, whereby the aggregation switches relay the messages to the gateway server, and the gateway server relays the messages to the dynamic host configuration server, and wherein the gateway server is operable to add dynamic host configuration server options to messages that it relays, and to remove dynamic host configuration server options from reply messages that it receives from the dynamic host configuration server.

There is additionally provided in accordance with an embodiment of the present invention a system for provisioning of point-to-point Ethernet data services via a cable provisioning infrastructure, including a multiple dwelling unit for a plurality of cable operator subscribers, including a plurality of subscriber customer premises equipment (CPEs), each CPE having a unique identifier, and one or more floor switches, each switch including one or more customer-facing ports, and a cable operator distribution hub, including one or more aggregation switches, wherein each floor switch is connected to one aggregation switch, an operations support system server, connected to the distribution hub, storing subscriber configuration files including classification rules and priority attributes of subscribed-to data services, and operative to provision one or more cable data services from a cable operator network to each subscriber CPE, and a gateway server, connected to the operations support system server, operative to translate the subscriber configuration files to floor switch configurations and aggregation switch configurations, wherein (i) each floor switch is operative to classify frames that it receives from CPEs to data services, to prioritize the thus-classified frames, into queues, and to enforce service level agreements for those data services, in the direction from the CPEs to the cable operator network, and (ii) each aggregation switch is operative to classify frames that it receives from the cable operator network to data services, to prioritize the thus-classified frames into queues, and to enforce service level agreements for those data services, in the direction from the cable operator network to said CPEs.

There is further provided in accordance with an embodiment of the present invention a system for managing network devices, including a plurality of managed devices, each device having a unique network address, and a gateway server operable to manage the managed devices, including a common network management agent for use with the managed devices, the network management agent having a switchable context and configured to allow access to different network management elements that belong to the managed devices, and a network management dispatcher configured to monitor network management protocol messages on network addresses of the managed devices, to switch the context of the network management agent to the context of a specific managed device when a network management protocol message arrives for a network address of that specific managed device, by updating the context of said network management agent to the context of the specific managed device, and by storing the previous context of the management agent prior to the updating, and to perform an action that accesses the managed device management elements in accordance with the management protocol message.

There is yet further provided in accordance with an embodiment of the present invention a method for using a cable operations support system infrastructure for provisioning point-to-point Ethernet data services, including relaying initial address request messages between a cable operator subscriber's customer premises equipment (CPE) and a dynamic address allocation server via both an aggregation switch of a cable distribution hub and a gateway server, adding, by the gateway server, dynamic address allocation server options to messages that it relays, and removing, by the gateway server, dynamic address allocation server options from reply messages that it receives from the dynamic address allocation server.

There is moreover provided in accordance with an embodiment of the present invention a method for using a cable operations support system infrastructure for provisioning point-to-point Ethernet data services, including configuring an aggregation switch in a cable distribution hub with an access control list (ACL) to perform the following actions, there being an ACL for each subscriber customer premises equipment (CPE) and subscribed-to data services, for a multiple dwelling unit of subscribers to cable data services via a cable operator network, each ACL including a data service classification rule based on a configuration file of a subscriber's cable modem: to receive frames of cable data from the operator network, to classify the received frames to data services, based on the ACLs, to prioritize the thus-classified frames into queues, and to enforce service level agreements for the thus-classified data services, in the direction from the cable operator network to the CPEs.

There is additionally provided in accordance with an embodiment of the present invention a method for managing network devices, including monitoring network management protocol messages on network addresses of a network of managed devices, each of which has a corresponding network management context including device configuration information, detecting a network management protocol message arriving for a network address of a specific managed device, identifying the context of the specific managed device based on its network address, switching the context of a network management agent, common to all of the managed devices, to the thus-identified context, including updating the context of the network management agent according to the context of the specific managed device, and storing the previous context of the network management agent prior to the updating, and accessing, by the network management agent, management elements, in accordance with the detected network management protocol message.

### BRIEF DESCRIPTION OF THE DRAWINGS

The present invention will be more fully understood and appreciated from the following detailed description, taken in conjunction with the drawings in which:
**FIG. 1** is a simplified block diagram of a conventional cable system;
**FIG. 2** is a simplified block diagram of a cable system that uses Data over Cable Service Interface Specification (DOCSIS), in accordance with an embodiment of the present invention;
**FIG. 3** is a simplified block diagram of a double-relay Dynamic Host Configuration Protocol (DHCP) architecture for provisioning IP addresses to CPEs, compliant with DOCSIS OSS, in accordance with an embodiment of the present invention;
**FIG. 4** is a simplified flowchart of a method for provisioning initial IP addresses to CPEs using a double-relay DHCP architecture, compliant with DOCSIS OSS, in accordance with an embodiment of the present invention;
**FIG. 5** is a simplified flowchart of a method for provisioning renewal IP addresses to CPEs using a double-relay DHCP architecture, compliant with DOCSIS OSS, in accordance with an embodiment of the present invention;
**FIG. 6** is a simplified flowchart of a method for translating DOCSIS configuration files to switch configurations, in accordance with an embodiment of the present invention;
**FIG. 7** is a simplified block diagram of a scalable Simple Network Management Protocol (SNMP) system architecture, in accordance with an embodiment of the present invention; and
**FIG. 8** is a simplified flowchart of a method for implementing a scalable Simple Network Management Protocol (SNMP) architecture, in accordance with an embodiment of the present invention.

The following acronyms are introduced and used in the description.
ACL - access control list
CM - cable modem
CMTS - cable modem termination system
DHCP - Dynamic Host Configuration Protocol
DOCSIS - Data over Cable Service Interface Specification
DPoP - DOCSIS provisioning of point-to-point Ethernet
HFC - hybrid fiber-coax
LAN - local area network
MAC - media access control
MDU - multiple dwelling unit
MIB - Management Information Base
OSS - Operations Support System
SDN - Software Defined Networking
SNMP - Simple Network Management Protocol
TFTP - Trivial File Transfer Protocol

For reference to the figures, the following index of elements and their numerals is provided. Similarly numbered elements represent elements of the same type, but they need not be identical elements. Operations of methods are numbered in the 1000's.

| Table of elements in the figures | |
|---|---|
| | |

| **Element** | **Description** |
|---|---|
| **100** | multiple dwelling unit |
| **110** | CPE |
| **120** | floor switches |
| **125** | DHCP helper |
| **200** | business site |
| **210** | Business CPEs |
| **220** | demarcation devices |
| **300** | distribution hub |
| **320** | aggregation switches |
| **325** | DHCP relay agent |
| **330** | edge router |
| **400** | back office network |
| **410** | DPoP server |
| **415** | DPoP DHCP relay agent |
| **440** | DOCSIS OSS servers |
| **445** | OSS DHCP server |
| **450** | operator regional network |
| **600** | SNMP system |
| **660** | SNMP dispatcher |
| **670** | SNMP agent |
| **680** | context table |
| **690** | MIB database |

### DETAILED DESCRIPTION

Aspects of the present invention relate to use of a DOCSIS infrastructure for provisioning of point-to-point Ethernet data services.

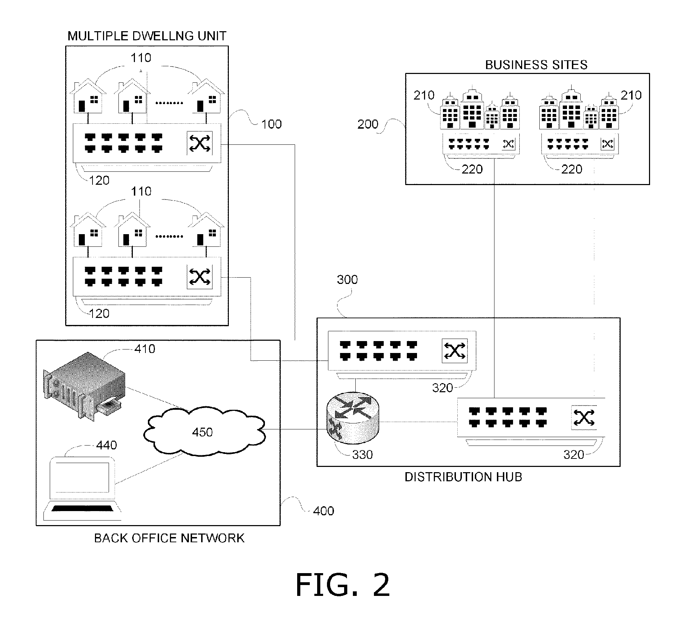

Reference is made to **FIG. 2**, which is a simplified block diagram of a cable system that uses Data over Cable Service Interface Specification (DOCSIS), in accordance with an embodiment of the present invention. **FIG. 2** shows four major components; namely, multiple dwelling unit (MDU) **100**, business sites **200**, distribution hubs **300** and a back office network **400**. MDU **100** includes homes with customer premises equipment (CPE) **110**, and floor switches **120**. Each floor switch **120** includes one or more local area network (LAN) ports, and stores one or more media access control (MAC) addresses of CPEs **110** in a MAC address table. Each LAN port of a floor switch **120** is used by a single subscriber. Business sites **200** include business services sites **210**, and demarcation devices **220**. Distribution hubs **300** include aggregation switches **320** and edge router **330**. Back office network **400** includes a DOCSIS provisioning of point-to-point Ethernet (DPoP) server **410**, operations support system (OSS) servers **440**, and an operator's regional network **450**.

In accordance with an embodiment of the present invention, each CPE **110** is connected to a single floor switch **120**, each floor switch **120** is connected to a single aggregation switch **320**, each aggregation switch **320** is connected to one or more floor switches **120**, and each demarcation device **220** is connected to a single floor switch or to a single aggregation switch. DPoP **410**, DOCSIS OSS servers **440** and aggregation switches **320** are connected to edge router **330**, either directly or via switches in regional network **450**.

Embodiments of the present invention enable the system of **FIG. 2** to offer the same management and provisioning capabilities as conventional coax deployments, with seamless connectivity to the DOCSIS OSS. In order to enable such capabilities, embodiments of the present invention provide (i) Dynamic Host Configuration Protocol (DHCP) capability for CPEs compliant with DOCSIS OSS, (ii) translation of DOCSIS configuration files to switch configurations, and (iii) scalable Simple Network Management Protocol (SNMP) architecture. Each of these features is described in detail hereinbelow.

### I. DOSCSIS OSS Compliant DHCP Capability for CPEs

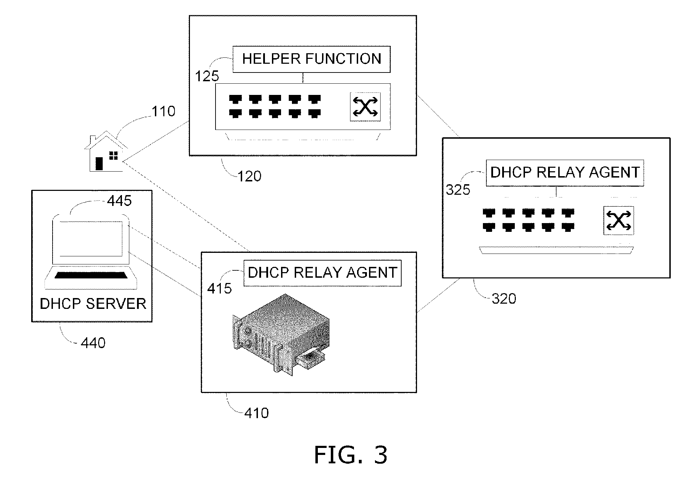

Reference is made to **FIG. 3**, which is a simplified block diagram of a double-relay Dynamic Host Configuration Protocol (DHCP) architecture for provisioning IP addresses to CPEs, complaint with DOCSIS OSS, in accordance with an embodiment of the present invention. DHCP is a network protocol used on IP networks for dynamically distributing network configuration parameters, such as IP addresses, for interfaces and services.

The DHCP protocol provides for vendor-specific options. The DOCSIS-specific DHCP options include inter alia (i) for address allocation requests, cable modem information such as type, software and hardware version, and (ii) for allocation requests of a CPE connected to the cable modem, a cable modem assigned IP address.

**FIG. 3** shows CPE **110**, DPoP server **410** with a DPoP DHCP relay agent **415**, a floor switch **120** with an optional DHCP helper **125**, an aggregation switch **320** with a DHCP relay agent **325**, and DOCSIS OSS servers **440** including an OSS DHCP server **445**. Under DHCP, network nodes request IP addresses and networking parameters automatically from a DHCP server, eliminating the need for a network administrator or a user to manually configure these settings. Under DOCSIS, a CPE **110** connected to a cable modem (CM) is assigned an IP address by OSS DHCP server **445**.

Use of a DOCSIS provisioning infrastructure for assigning IP addresses to CPEs leads to several technical challenges which need to be overcome, as described hereinbelow.

### Technical Challenge - Aggregation switch 320 blocks broadcast frames.

Since aggregation switch **320** is connected to edge router **330**, it must act as a router as well when communicating with edge router **330**. By default, a router blocks IP broadcast frames. However, some DHCP messages generated by CPE **110** are IP broadcast and multi-cast frames. As such, aggregation switch **320** must perform a DHCP relay function that overwrites the broadcast/multi-cast destination address in DHCP messages to a uni-cast destination address of a pre-configured network node. In accordance with an embodiment of the present invention, this address is configured to be the address of DPoP server **410**.

### Technical Challenge - Aggregation switch 320 is not DOCSIS aware, and cannot add and remove DOCSIS-specific DHCP options to messages it relays between OSS DHCP server 445 and CPE 110.

DOCSIS OSS DHCP server **445** is programmed to send and receive DOCSIS-specific DHCP options, whereas the DHCP client of CPE **110** is not DOCSIS-aware and, as such, cannot send and receive these options. DHCP messages cannot be relayed by aggregation switch **320** directly from CPE **110** to DOCSIS OSS DHCP server **445**, because aggregation switch **320** is not DOCSIS-aware, and cannot add DOCSIS-specific DHCP options to message originated by CPE **110**, and cannot remove DOCSIS-specific DHCP options from messages destined to CPE **110**. However, DPoP server **410** is DOCSIS-aware, and its DPoP DHCP relay agent **415** can add and remove the DOCSIS-specific DHCP options as required.

In accordance with an embodiment of the present invention, a double DHCP relay is performed. Specifically, aggregation DHCP relay agent **325** is pre-configured to relay DHCP messages to DPoP server **410**, and DPoP DHCP relay agent **415** is pre-configured to relay DHCP messages to OSS DHCP server **445**.

### Technical Challenge - When OSS DHCP server 445 receives a message from a CPE 110, it may need to identify that CPE in order to process the message, but under DOCSIS a CPE is identified based on the cable modem (CM) to which it is attached.

DOCSIS OSS DHCP server **445** must identify CPE **110**, in order to determine if to assign an IP address to it and, if so, what IP address to assign. Under DOCSIS, CPE identification is based on identification of the cable modem (CM) to which the CPE is attached. In accordance with an embodiment of the present invention, the CM is identified according to the MAC address of the floor switch LAN port **120** to which a CPE is connected.

In one embodiment of the present invention, when a DHCP message arrives from a CPE **110**, the floor switch LAN port **120** of that CPE is identified by means of DHCP helper **125** in floor switch **120**. Specifically, DHCP helper **125** adds a DHCP option to the DHCP message from the CPE, which includes a LAN port identifier. This data is received by DPoP server **410**, and DPoP DHCP relay agent **415** converts this data to a proper DOCSIS-specific DHCP option.

In an alternative embodiment of the present invention, when a DHCP message arrives from a CPE **110**, the floor switch LAN port **120** of that CPE is identified by extracting the MAC address of the CPE from the DHCP message in DPoP server **410**, and searching for this MAC address in the MAC address tables in the floor switches **120** connected to that aggregation switch **320** via which the message arrived. When the MAC address is found, the floor switch LAN port **120** to which the CPE is connected is then identified. Under DHCP version 4, the CPE's MAC address may be extracted from the "Client ID" field in the DHCP message. Under DHCP version 6, the CPE's MAC address may be extracted from the "DUID" field in the DHCP message, or from the "Local Link IP version 6" address of the DHCP message.

### Technical Challenge - A DHCP client may request renewal of its IP address allocation from time to time, but direct communication between the client and the DHCP server will fail due to missing DOCSIS-specific DHCP options in the client request.

Under DHCP, a client may request renewal of its IP address allocation from time to time. Conventionally, this is performed directly between the client and the DHCP server that allocated the IP address to the client. However, the data path of system of **FIG. 2** does not go through DPoP server **410**, and such a request may lead to direct communication between the DHCP client in CPE **110** and the OSS DHCP server **445**, which would fail due to missing DOCSIS-specific DHCP options in the client's DHCP message.

In accordance with an embodiment of the present invention, DPoP DHCP relay agent **415** overwrites the OSS DHCP server address, in the DHCP IP address allocation message sent to the DHCP client of CPE **110**, with the address of DPoP server **410**, thus ensuring that future IP address renewal requests by CPE **110** are sent to DPoP server **410**. DPoP DHCP relay agent **415** changes the destination address of the message to the address of the OSS DHCP server **445** and adds the required DOCSIS-specific DHCP options. DPoP server **410** then relays the messages to OSS DHCP server **445**. The CPE DHCP renewal IP request messages traverse the following logical path: CPE **110** ←→ DPoP DHCP relay agent **415** ←→ OSS DHCP server **445**.

### Technical Challenge - In certain cases, OSS DHCP server 445 does not accept DHCP version 6 messages that were relayed by two of more DHCP version 6 relay agents.

Under DHCP version 6, each relay between a client and the server adds a relay agent message header option identifying its existence. In some cases OSS DHCP server 445 does not accept DHCP version 6 messages that were relayed by two or more such relay agents. Moreover, in the double-relay system of **FIG. 3** there are two relay agents; namely, relay agent **325** and DPoP DHCP relay agent **415**.

In accordance with an embodiment of the present invention, DPoP DHCP relay agent **415** overwrites the aggregation switch relay agent relay header option with its own relay header option, thus making the double relay appear as a single relay. DPoP DHCP relay agent **415** saves the overwritten information in a database, in order that the aggregation switch relay agent relay header option is restored for communication in the opposite direction. The overwritten information incudes inter alia "Interface ID" and "Link Address" fields.

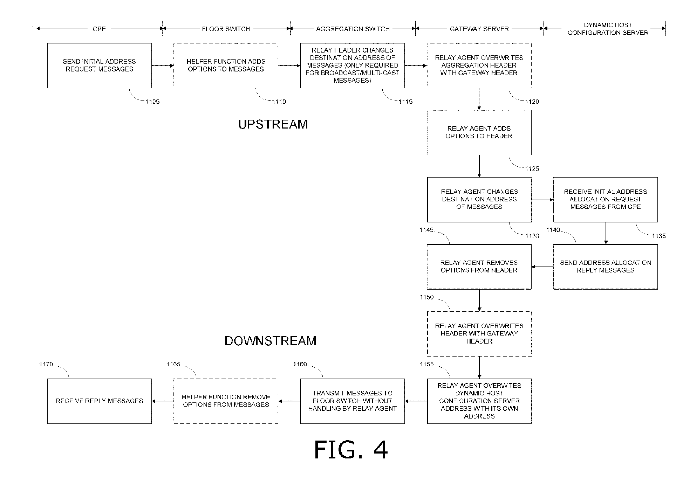

Reference is made to **FIG. 4**, which is a simplified flowchart of a method for provisioning initial IP addresses to CPEs using a double-relay DHCP architecture, compliant with DOCSIS, in accordance with an embodiment of the present invention. The flowchart of **FIG. 4** is divided into five columns. The leftmost column indicates operations performed by a CPE, such as CPE **110**. The column second to the left indicates operations performed by a floor switch, such as floor switch **120**. The middle column indicates operations performed by an aggregation switch, such as aggregation switch **320**. The column second to the right indicates operations performed by a gateway server, such as DPoP server **410**. The rightmost column indicates operations performed by a dynamic host configuration server, such as OSS DHCP server **445**. Operations **1105** - **1135** flow in the upstream direction, from the CPE to the dynamic host configuration server. Operations **1140 - 1170** flow in the downstream direction, from the dynamic host configuration server to the CPE.

At operation **1105**, the CPE sends initial address request messages to the dynamic host configuration server via the floor switch. Operation **1110** is optional, and is performed when the floor switch includes a helper function, such as helper function **125**. At operation **1110**, the helper function adds options, such as DHCP options, to the messages. At operation **1115**, a relay agent in the aggregation switch, such as relay agent **325**, changes the destination address of the messages and optionally adds a relay header option, and the aggregation switch transmits the messages to the gateway server. Use of the relay agent is only necessary for broadcast and multi-cast messages. Operation **1120** is optional, and is performed when the dynamic host configuration server does not accept address request messages that were relayed by two relay agents. At operation **1120**, a relay agent in the gateway server, such as relay agent **415**, stores the aggregation switch relay header relay option in a database and overwrites the aggregation switch relay agent relay header option with its own relay header option. At operation **1125**, the relay agent of the gateway server adds options, such as DOCSIS DHCP options, to the header. At operation **1130**, the relay agent in the gateway server changes the destination address of the messages, and the gateway server transmits the messages to the dynamic host configuration server. Finally, at operation **1135**, the dynamic host configuration server receives the initial address allocation request messages.

At operation **1140**, the dynamic host configuration server sends reply messages to the CPE, via the gateway server. At operation **1145**, the relay agent in the gateway server removes options, such as DOCSIS DHCP options, from the header. Operation **1150** is optional, and is performed if operation **1120** was performed. At operation **1150** the relay agent in the gateway server overwrites the relay header option with its own relay header option. At operation **1155**, the relay agent overwrites the dynamic host configuration server address with its own address. Operation **1155** ensures that the client in CPE **110** requests address renewals from DPoP relay agent **415**, instead of from OSS DHCP server **445**. The gateway server then transmits the message to the aggregation switch. At operation **1160**, the aggregation switch transmits the message to the floor switch without handling by its relay agent. Use of the relay agent is not required at operation **1160**, since the reply messages are uni-cast messages. Operation **1160** is an optional operation. If the floor switch helper function added options to the request messages at operation **1110**, then the helper function removes these options from the messages at operation **1160**. Finally, at operation **1165**, the CPE receives the address allocation reply messages.

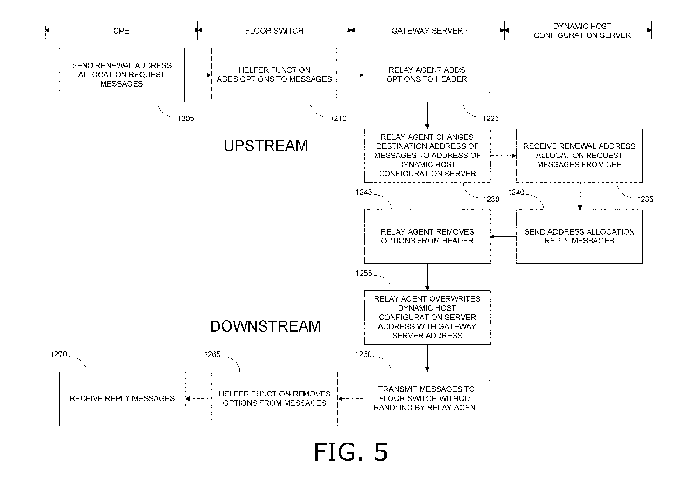

Reference is made to **FIG. 5**, which is a simplified flowchart of a method for provisioning renewal IP addresses to CPEs using a double-relay DHCP architecture, compliant with DOCSIS, in accordance with an embodiment of the present invention. The flowchart of **FIG. 5** is divided into four columns. The leftmost column indicates operations performed by a CPE, such as CPE **110**. The column second to the left indicates operations performed by a floor switch, such as floor switch **120**. The column second to the right indicates operations performed by a gateway server, such as DPoP server **410**. The rightmost column indicates operations performed by a dynamic host configuration server, such as OSS DHCP server **445**. Operations **1205 - 1335** flow in the upstream direction, from the CPE to the dynamic host configuration server. Operations **1240 - 1270** flow in the downstream direction, from the dynamic host configuration server to the CPE.

At operation **1205**, the CPE sends renewal address allocation request messages to the gateway server via the floor switch. Operation **1210** is optional, and is performed when the floor switch include a helper function, such as helper function **125**. At operation **1210**, the helper function adds options, such as DHCP options, to the messages. At operation **1225**, the relay agent in the gateway server, such as relay agent **415**, adds options, such as DOCSIS DHCP options, to the header. At operation **1230**, the gateway server changes the destination address of the messages to the address of the dynamic host configuration server. Finally, at operation **1235**, the dynamic host configuration server receives the renewal address allocation request messages.

At operation **1240**, the dynamic host configuration server sends reply messages to the CPE, via the gateway server. At operation **1245**, the relay agent in the gateway server removes options, such as DOCSIS DHCP options, from the header. At operation **1255**, the relay agent in the gateway server overwrites the dynamic host configuration server address with the gateway server address. At operation **1260** the gateway server transmits the message to the floor switch without handling by its relay agent. Operation **1265** is an optional operation. If the floor switch help function added options to the request messages at operation **1210**, then the helper function removes those options from the messages at operation **1265**. Finally, at operation **1270**, the CPE receives the address allocation reply message.

### II. Translation of DOCSIS Configuration Files to Switch Configurations

Trivial File Transfer Protocol (TFTP) is used for configuring a network device during its boot process. Conventional DOCSIS provisioning relies on a configuration file that is downloaded from a DOCSIS OSS TFTP server by a CM. The configuration file contains many elements, including inter alia
- service classification and prioritization
- service level agreement (SLA)
- limitation on the number of CPEs that connect to the CM.

Under conventional DOCSIS, service classification and SLA enforcement in the downstream direction are performed at the cable modem termination system (CMTS), and service classification and SLA enforcement in the upstream direction are performed at the CM. The downstream direction refers to the direction from network **450** to a CPE **110**, and the upstream direction refers to the direction from a CPE **110** to network **450**.

In accordance with an embodiment of the present invention, aggregation and floor switches are configured to perform service classification, prioritization and SLA enforcement, with the same expected behavior as if the classification, prioritization and enforcement were performed by the CMTS and by the CM.

### Downstream Direction

In the downstream direction, aggregation switch **320** is configured to act as the CMTS. Aggregation switch **320** is configured with access control lists (ACLs) to classify frames according to data services. ACLs are built for each subscriber's CPE and for each data service that the subscriber is subscribed to. Each ACL's classification conditions include the service's downstream classification rule from the configuration file of the subscriber's CM, with the additional condition that an incoming frame must have the CPE's IP address as its destination IP address. The ACL points to an aggregation switch policer that enforces the SLA of the service to which the classification rules belongs. Several ACLs may point to a common policer when aggregated rate-limiting of a subscriber's services is required. The ACLs are ordered based on their precedence in the configuration file. This is performed by adding the classification rules in decreasing precedence order. Alternatively, this may be done by indicating rule precedence, if aggregation switch **320** supports this.

In a DOCSIS configuration file of a subscriber's CM, each data service has a service priority attribute, which determines service priority vis-à-vis other data services. Aggregation switch **320** directs frames matching an ACL to a queue based on the service priority attribute of the data service that is classified using that ACL. Generally, there are more service priority values than queues and, as such, many service priorities may be mapped to a single queue.

### Upstream Direction

Each LAN port of floor switch **120** is used by a single subscriber, and each LAN port of floor switch **120** is configured to act as a CM. The limitation on the number of CPEs **110** that connect to the CM is enforced by limiting the number of learned MAC addresses per LAN port of floor switch **120**. Furthermore, floor switch **120** is configured to discard frames arriving in the upstream direction when its MAC source address field is unknown, thereby effectively limiting the number of CPEs that can send their traffic to network **450**.

In the upstream direction, floor switch **120** is configured with ACLs to classify frames according to data services. An ACL is built for each subscriber's data service. The ACL's classification includes the service's upstream classification rule in the configuration file of the subscriber's CM. The ACL points to a floor switch policer that enforces the SLA of the data service to which the classification rule belongs. Several ACLs may point to a single policer, when aggregated rate-limiting of a subscriber's service is required. The ACLs are ordered based on their precedence in the configuration file. This may be done by adding the classification rules in decreasing precedence order. Alternatively, this may be done by indicating rule precedence, if floor switch **120** supports this.

In accordance with an embodiment of the present invention, to support service priority, floor switch **120** maps priority fields such as "IP DSCP" to queues as a default behavior, and directs frames matching an ACL to a queue based on the DOCSIS "Service Priority" field of the data service that is classified by this ACL. Generally, there are more service priority values than queues and, as such, many service priorities may be mapped to a single queue. Floor switch **120** may also overwrite the "IP DCSP" field of incoming frames in order to homogenize the priority of different data services among different subscribers inside the service provider's network.

It is noted that less sophisticated floor switches and less expensive floor switches may not have the capabilities required to perform the above service classification and prioritization. In such case, floor switch **120** only polices the upstream traffic of each LAN port according to an aggregated rate-limiting of a subscriber's services, and maps priority fields such as "IP DSCP" to queues, and aggregation switch **320** performs similar policing actions in the upstream direction as it does in the downstream direction. In such case, an ACL is built for each subscriber's CPE and for each data service that the subscriber is subscribed to. The ACL's classification conditions include the service's upstream classification rule in the configuration file of the subscriber's CM, with the additional condition that an incoming frame must have the CPE's IP address as its source IP address. The ACL points to an aggregation switch policer that enforces the SLA of the service to which the classification rule belongs. The ACLs are ordered based on their precedence in the configuration file. This may be performed by adding the classification rules in decreasing precedence order. Alternatively, this may be done by indicating rule precedence, if the aggregation switch **320** supports this.

When aggregation switch **320** performs policing actions in the upstream direction, in order to support service priority, aggregation switch **320** maps priority fields such as "IP DSCP" to queues as a default behavior, and directs frames matching an ACL to a queue based on the DOCSIS "Service Priority" field of the data service classified by this ACL. Generally, there are more service priority values than queues and, as such, many service priorities may be mapped to a single queue. Aggregation switch **320** may also overwrite the "IP DSCP" field of incoming frames, in order to homogenize the priority of different data services among different subscribers inside a service provider's network.

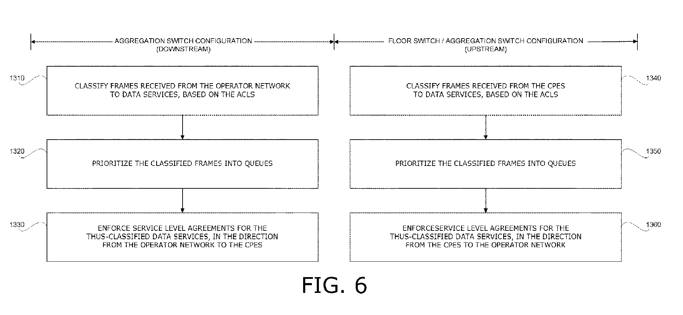

Reference is made to **FIG. 6**, which is a simplified flowchart of a method for translating DOCSIS configuration files to switch configurations, in accordance with an embodiment of the present invention. **FIG. 6** includes two columns. The left column includes operations **1310** - **1330**, which are performed via configuration of an aggregation switch **320** of distribution hub **300**. The right column includes operations **1340 -1360**, which are performed via configuration of a floor switch **120**, provided that the floor switches support classification and prioritization of frames. Otherwise, the operations in the right column are performed via configuration of aggregation switch **320**. The left column relates to the downstream direction, from operator network **450** to CPEs **110**. The right column relates to the upstream direction, from CPEs **110** to operator network **450**.

In accordance with an embodiment of the present invention, ACLs are built for each subscriber CPE and for each data service that the subscriber is subscribed to, for MDU **100** of subscribers to cable data services. Each ACL includes a data service classification rule based on a subscriber's configuration file. Moreover, when operations **1340 - 1360** are performed via configuration of aggregation switch **320**, the ACL further includes a CPE unique identifier.

At operation **1310** frames received from operator network **450** are classified by data services, based on the ACLs. At operation **1320**, the thus-classified frames are prioritized into queues. At operation **1330** aggregation switch **320** enforces service level agreements for the thus-classified data services, in the direction from operator network **450** to CPEs **110**.

At operation **1340** frames received from CPEs **110** are classified by data services, based on the ACLs. At operation **1350**, the thus-classified frames are prioritized into queues. At operation **1360** floor switch **120** or aggregation switch **320** enforces service level agreements for the thus-classified data services, in the direction from CPEs **110** to operator network **450**.

### III. SNMP Capability

Simple Network Management Protocol (SNMP) is used for managing devices on an IP network. In conventional DOCSIS, each CM runs an SNMP agent that allows read and/or write access to different Management Information Base (MIB) elements. The SNMP agent is accessed through the IP address that the OSS DHCP server **445** allocated to a CM.

In accordance with an embodiment of the present invention, virtual CMs are used instead. DOCSIS-based server **410** implements these virtual CMs. It performs the DHCP process with OSS DHCP server **450** in order to allocate an IP address per virtual CM. It also holds an SNMP agent for each virtual CM. However, instead of holding a separate instance of an SNMP agent per virtual CM, which requires extensive memory and operating system resources, a single SNMP agent for all the virtual CMs is held, and a context switch mechanism is used for handling SNMP messages destined for different virtual CMs.

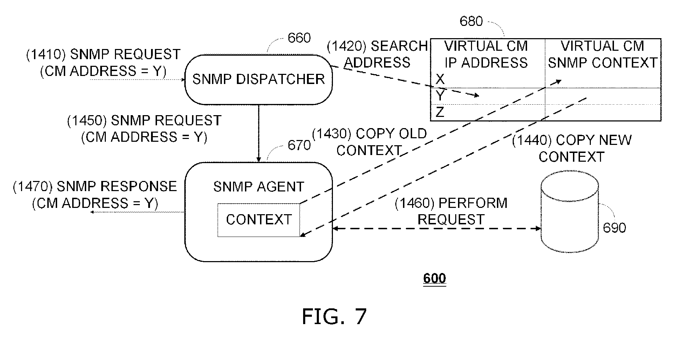

Reference is made to **FIG. 7**, which is a simplified block diagram of an SNMP system architecture **600**, in accordance with an embodiment of the present invention. SNMP architecture **600** is a component of DPoP server **410**. Shown in **FIG. 6** is an SNMP dispatcher **660** and an SNMP agent **670**.

At operation **1410**, SNMP dispatcher **660** listens to SNMP traffic on IP addresses of the virtual CMs. When an SNMP message arrives for one of these addresses, SNMP dispatcher **660** switches SNMP agent **670** to the context of the specific instance of the virtual CM, using a context table **680** that stores a context for each virtual CM. The context includes the virtual CM IP address and its SNMP-related configuration, e.g., SNMP Address Community and SNMP Access Control. Specifically, if the address of the virtual CM in the SNMP request is Y, then at operation **1420**, SNMP dispatcher **660** searches context table **680** for address Y.

When a virtual CM with address Y is found, a context switch for SNMP agent **670** is performed at operations **1430** and **1440**. However, if a current message relates to a virtual CM that was previously used, no context switch for SNMP agent **670** is required. At operation **1330**, the current context of SNMP agent **670**, say, corresponding to a virtual CM with address X, is copied to context table **680**. At operation **1340**, the context of SNMP agent **670** is updated with the new virtual CM context, say, corresponding to the virtual CM with address Y. Subsequently, at operation **1450**, SNMP dispatcher **660** transfers the SNMP message to SNMP agent **670**. At operation **1460**, SNMP agent **670** performs the required action in that context, using an MIB database **690** that stores data of the SNMP MIBs for each virtual CM. The required action may change the context of the virtual CM, hence the need at operation **1430** to save the old context to context table **680**. Each context change is marked, so that a context is not copied to context table **680** unnecessarily when performing a context switch. Finally, at operation **1470**, SNMP agent **670** sends an SNMP response back to the sender of the original SNMP message.

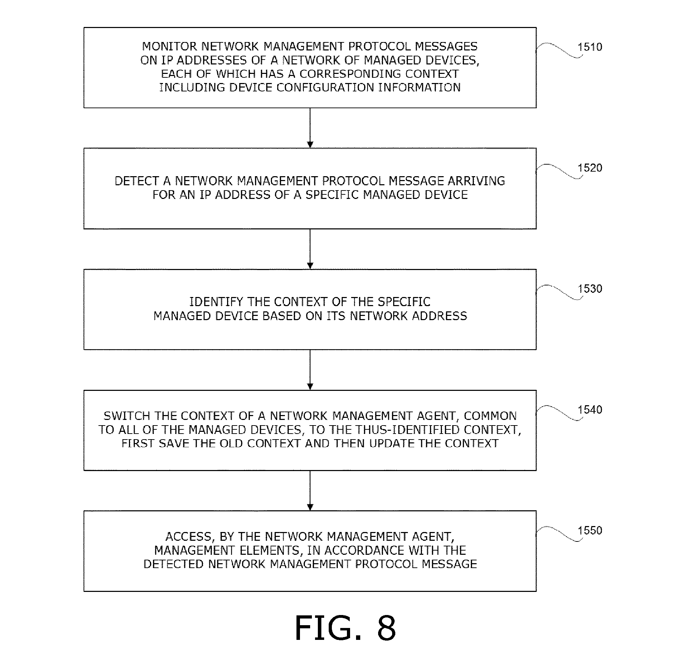

Reference is made to **FIG. 8**, which is a simplified flowchart of a method for provisioning Simple Network Management Protocol (SNMP) capability, in accordance with an embodiment of the present invention. At operation **1510** protocol messages are monitored. Other non-protocol traffic is not monitored. Specifically, at operation **1510** network management protocol messages, such as SNMP messages, on IP addresses of a network of managed devices is monitored, each managed device having a corresponding context comprising device configuration information, such as SNMP configuration information. At operation **1520** a network management protocol message arriving for an IP address of a specific managed device is detected. At operation **1530** the context of the specific managed device is detected, based on its IP address. At operation **1540** the context of a network management agent, such as an SNMP agent, common to all of the managed devices, is switched to the thus-identified context. Prior to updating its context, the current context of the network management agent is stored in a context database. At operation **1550**, the network management agent accesses management elements, such as MIBs, of the specific managed device, in accordance with the detected network management protocol message. Operation **1550** may change the context of the network management agent, hence the need at operation **1540** to store the old context.

The methods of **FIGS. 4**, **5**, **6** and **8** may be practiced separately or in combination, by the system of **FIG. 2**.

Having read the above description, it will be appreciated by those skilled in the art that the scalable SNMP capability of the present invention is not limited to DOCSIS provisioning architecture, and applies broadly to other systems where a server needs to act as an SNMP agent for a large number of devices.

Although the above description relates specifically to MDUs, the systems and methods described above relate to business sites as well, whereby demarcation devices **220** (**FIG. 2**) are configured similarly to floor switches **120** by DPoP server **410**, and business CPEs are regarded as residential CPEs.

In the foregoing specification, the invention has been described with reference to specific exemplary embodiments thereof. It will, however, be evident that various modifications and changes may be made to the specific exemplary embodiments without departing from the broader spirit and scope of the invention as set forth in the appended claims. Accordingly, the specification and drawings are to be regarded in an illustrative rather than a restrictive sense.

## Claims

1. A system for provisioning of point-to-point Ethernet data services via a cable provisioning infrastructure, comprising:
a multiple dwelling unit for a plurality of cable operator subscribers, comprising:
a plurality of subscriber customer premises equipment (CPEs), each CPE having a unique identifier; and
one or more floor switches, each floor switch comprising one or more customer-facing ports, wherein each CPE is connected to one of the customer-facing ports, and each customer-facing port of each floor switch stores the unique identifiers of the CPEs connected to that floor switch, in an identifier database; and
a cable operator distribution hub, comprising one or more aggregation switches, wherein each floor switch is connected to one aggregation switch;
a gateway server, connected to said distribution hub; and
an operations support system server, connected to said gateway server, operable to provision cable data services to the subscribers, comprising a dynamic host configuration server operative to dynamically allocate network addresses to said CPEs, wherein said aggregation switches and said gateway server are configured to intermediate as a double-relay for initial network address request messages between said CPEs and said dynamic host configuration server, whereby said aggregation switches relay the messages to said gateway server, and said gateway server relays the messages to said dynamic host configuration server, and
wherein said gateway server is operable to add dynamic host configuration server options to messages that it relays, and to remove dynamic host configuration server options from reply messages that it receives from said dynamic host configuration server.

2. The system of claim 1 wherein said gateway server is further operable to overwrite an aggregation switch relay header with its own header, in the initial network address request messages being relayed from an originating CPE to said dynamic host configuration server, thus making the double-relay appear as a single-relay, and to restore the aggregation switch relay header in reply messages being relayed from said dynamic host configuration server to the originating CPE.

3. The system of claim **1 or 2**, wherein said gateway server is further configured to overwrite the address of said dynamic host configuration server in renewal network address request messages being relayed from an originating CPE to said dynamic host configuration server, with the address of said gateway server, so that such request messages are transmitted to said gateway server, which in turn relays the request messages to said dynamic host configuration server.

4. The system of any one of the previous claims, wherein said gateway server is further configured to extract information from a message being relayed from an originating CPE to said dynamic host configuration server, and to use the thus-extracted information to identify the customer-facing port of the floor switch to which the originating CPE is attached.

5. The system of claim **4**, wherein said gateway server searches for the thus-extracted information in the identifier databases in the customer-facing ports of those of said floor switches connected to that aggregation switch that relayed the message from the originating CPE to said gateway server.

6. The system of any one of the previous claims, wherein said floor switches employ a helper function, configured to add a customer-facing port identifier to the message being relayed from an originating CPE to said dynamic host configuration server, thereby enabling said gateway server to identify the floor switch customer-facing port to which the originating CPE is attached.

7. The system of any one of the previous claims, wherein each floor switch is configured to limit the number of CPE unique identifiers that it stores per customer-facing port.

8. A method for using a cable operations support system infrastructure for provisioning point-to-point Ethernet data services, comprising:
relaying initial address request messages between a cable operator subscriber's customer premises equipment (CPE) and a dynamic address allocation server via both an aggregation switch of a cable distribution hub and a gateway server;
adding, by the gateway server, dynamic address allocation server options to messages that it relays; and
removing, by the gateway server, dynamic address allocation server options from reply messages that it receives from the dynamic address allocation server.

9. The method of claim **8** further comprising:
overwriting, by the gateway server, an aggregation switch relay header with its own header, in the initial network address request messages being relayed from the CPE to the dynamic address allocation server, thus making the double relay appear as a single relay; and
restoring, by the gateway server, the aggregation switch relay header in reply messages being relayed from the dynamic address allocation server to the CPE.

10. The method of claim **8 or 9**, further comprising overwriting the address of the dynamic address allocation server in renewal network address request messages being relayed from an originating CPE to the dynamic address allocation server, with the address of the gateway server, so that such messages are instead transmitted to the gateway server, which in turn relays the request messages to the dynamic address allocation server.

11. The method of any one of claims **8 to 10**, further comprising:
extracting, by the gateway server, information from a message relayed from a CPE to the dynamic network address allocation server; and
identifying a floor switch customer-facing port to which the CPE is attached, based on the thus-extracted information.

12. The method of claim **11**, wherein the CPE is located within a multiple dwelling unit comprising many cable operator subscribers, and wherein said identifying comprises searching, by the gateway server, for the thus-extracted information in identifier databases of floor switches of the multiple dwelling unit that are connected to the aggregation switch that relayed the message from the CPE to the gateway server.

13. The method of claim **11**, wherein the CPE is located within a multiple dwelling unit comprising many cable operator subscribers, the method further comprising adding, by a floor switch of the multiple dwelling unit, a customer-facing port identifier to a message being relayed from the CPE to the dynamic network address allocation server, and wherein said
identifying is based on the customer-facing port identifier.
